# EUROPÄISCHE PATENTSCHRIFT

(11) **EP 1 525 421 B1**
(45) Veröffentlichungstag und Bekanntmachung des Hinweises auf die Patenterteilung: **29.11.2006**
(21) Anmeldenummer: 03766286.3
(22) Anmeldetag: 24.07.2003
(51) Int. Cl.: F16L 25/00, F16L 33/207, F16L 33/01

(54) **WELLROHRSCHLAUCHLEITUNG UND ANSCHLUSSVERFAHREN**
CORRUGATED PIPE HOSE ASSEMBLY AND CONNECTION METHOD
CONDUITE COMPRENANT UN ENSEMBLE TUYAU FLEXIBLE-TUBE ONDULE ET PROCEDE DE RACCORDEMENT

(30) Priorität: 27.07.2002 DE 10234372
(43) Veröffentlichungstag der Anmeldung: 27.04.2005
(73) Patentinhaber: Eaton Fluid Power GmbH, 76532 Baden-Baden (DE)
(72) Erfinder: HILGERT, Andreas, 76547 Sinzheim (DE)
(74) Vertreter: Rüger, Barthelt & Abel Patentanwälte
(86) Internationale Anmeldenummer: PCT/EP2003/008148
(87) Internationale Veröffentlichungsnummer: WO 2004/013532

(56) Entgegenhaltungen:
- DE-U- 7 314 756
- US-A- 2 309 719

## Beschreibung

Die Erfindung betrifft eine Wellrohrschlauchleitung und ein Verfahren zum Anschließen eines Wellrohrschlauchs zur Herstellung einer solchen Wellrohrschlauchleitung.

Als Fluidleitungen werden, insbesondere zur beweglichen Verbindung von fluidführenden Aggregaten, so genannte Wellrohrschläuche verwendet. Diese weisen ein inneres Wellrohr auf, das einen Fluidkanal festlegt. Das meist aus Metall bestehende Wellrohr ist von einer Ummantelung umgeben, die im wesentlichen aus Kunststoff, Elastomermaterial sowie weiteren Komponenten besteht. Die Ummantelung ist häufig mehrschichtig aufgebaut. Beispielsweise besteht sie aus einer Schlauchseele, die sich unmittelbar an das Wellrohr anschließt. Die Schlauchseele trägt häufig einen so genannten Druckträger, der aus einem zugfesten Material gewickelt ist, um die Druckfestigkeit des Wellrohrschlauchs sicherzustellen. Auf dem Druckträger ist meist noch eine Schlauchdecke aufgebracht, die eine äußere Schutzhülle darstellt. Bei der Herstellung solcher Wellrohrschläuche werden die einzelnen Schichten der Ummantelung in aufeinander folgenden Arbeitsgängen auf die vorbereiteten Wellrohre extrudiert, die an beiden Enden bereits mit Anschlussnippeln versehen sind. Dadurch sind die Leitungslängen jedoch auf produktionsbedingt fest vorgegebene Maße festgelegt.

Das Anschließen von Wellrohrschläuchen, die keine Anschlussnippel aufweisen, stellt deshalb ein besonderes Problem dar. Andererseits wünschen Anwender gerade, vor Ort, d.h. unabhängig von einem vorgegebenen Herstellungsverfahren, aus langem oder endlosem Wellrohrschlauch-Halbzeugmaterial die gewünschten Verbindungsleitungen herstellen zu können, ohne auf spezielle Lieferungen eines Wellrohrschlauchherstellers angewiesen zu sein. Die DE-U-73 14 756 beschreibt eine Wellrohrschlauchleitung gemäß dem Oberbegriff von Anspruch 1.

Die Verbindung eines Wellrohrschlauchs zu einer weiterführenden Leitung oder zu einem fluidführenden Aggregat muss in mechanischer Hinsicht stabil sein. Sie muss dauerhaft dicht sein und sie soll auf einfache Weise herstellbar sein. Weder Druckbelastung noch mechanische Belastung, wie sie in Betrieb entsprechender Einrichtungen und Aggregate zu erwarten ist, soll oder darf zu Undichtigkeit oder zu einer sonstigen Beschädigung der Verbindung führen.

Führt der Wellrohrschlauch hohe Drücke, liegen diese Drücke dauernd an, ist der Wellrohrschlauch Temperaturwechseln, Vibrationen oder anderen lang dauernden Belastungen ausgesetzt, kann die Verbindung zu einem Anschlussnippel besonders kritisch sein.

Davon ausgehend ist es Aufgabe der Erfindung, eine Möglichkeit zur Herstellung von Wellrohrschlauchleitungen durch Verwendung nicht vorkonfektionierter Wellrohrschläuche zu schaffen, die besonders belastbar ist.

Diese Aufgabe wird mit der Wellrohrschlauchleitung nach Anspruch 1 sowie mit dem entsprechenden Anschlussverfahren gelöst:

Die erfindungsgemäße Wellrohrschlauchleitung weist einen Wellrohrschlauch und wenigstens eine endseitig angeordnete Fassung auf, die fest mit dem Wellrohrschlauch verbunden ist. Die Fassung bildet ein Ansatzstück, das mit einer weiterführenden Leitung beispielsweise einem Rohr oder auch einem Fluidkanal eines angeschlossenen Aggregats verbunden ist. Zur Verbindung der Fassung mit dem Wellrohrschlauch ist endseitig ein Abschnitt des inneren Wellrohrs des Wellrohrschlauchs freigelegt und in einen ersten rohrförmigen Teil der Fassung eingeschoben. Die Passung ist derart verformt, dass die Innenwandung einer von der Fassung aufgenommenen Dichtungsbuchse abdichtend an wenigstens einer Rippe des Wellrohrs anliegt. Die vorzugsweise zunächst zylindrische Innenwandung liegt nach der Verformung mit Vorspannung an der Rippe an, so dass die Rippe fest gegen die Innenwandung gepresst ist. Außerdem kann das Material der Dichtungsbuchse plastisch oder elastisch in einen Rippenzwischenraum eindringen. Dieser Presssitz bildet eine zuverlässige Abdichtung insbesondere gegen unter hohem Druck stehende Fluide, wie beispielsweise CO₂. Solche Fluide kommen zunehmend in Kältemaschinen als Kältemittel zur Anwendung, insbesondere im Automobilbereich. Außerdem bewirkt der feste, durch die Dichtungsbuchse jedoch mechanisch gepufferte Sitz des Wellrohrs in dem ersten Teil der Fassung eine vibrationsfeste mechanische Halterung des Wellrohrschlauchs.

In den Rippenzwischenräumen verbleibende abgeschlossene Ringräume bilden Pufferräume, die sich je nach der Diffusionsfähigkeit des Fluids früher oder später mit geringsten Fluidmengen füllen, dabei aber die Druckdifferenz an den einzelnen Dichtungsstellen reduzieren. Dichtungsstellen sind jeweils an der Berührungsstelle Rippe/Dichtungsbuchse gebildet.

Die Dichtungsbuchse kann vollständig homogen ausgebildet werden. Es ist auch möglich, diese mit Einlagen zu versehen, um z.B. Diffusionssperren zu bilden.

Die Fassung ist außerdem mit der Ummantelung des Wellrohrschlauchs verbunden, beispielsweise durch einen becherförmigen Teil in den sich die Ummantelung hinein erstreckt.

Derartige Verbindungen lassen sich nachträglich an einem Wellrohrschlauchende erzeugen, indem ein Teil der Ummantelung entfernt und das Wellrohrende in der Fassung gesichert wird.

Zur Herstellung des fluiddichten Presssitzes des Wellrohrs in dem ersten Teil der Fassung kann eine Deformation des rohrförmigen ersten Teils in radialer Richtung vorgenommen werden. Die Deformation ist in einem ringförmigen Bereich durchzuführen, der eine Rippe des Wellrohrs oder mehrere Rippen desselben überspannt. Die Deformation kann beispielsweise durch eine Pressvorrichtung vorgenommen werden, die mehrere sich radial nach innen bewegende Pressbacken aufweist, und unter deren Wirkung der rohrförmige Teil verengt, um das Wellrohr einzuklemmen. Die Lagerung und Klemmung des Wellrohrs an mehreren Rippen ergibt eine besonders sichere mechanische Verbindung und gute Abdichtung. Alternativ ist Magnetkompression oder eine Schrumpfverbindung möglich.

Die Abdichtung der Dichtungsbuchse kann durch eine metallische Dichtung zwischen dem Wellrohr und dem Fassungsteil ergänzt werden. Dazu wird ein Abschnitt der Fassung mit geringerem Innendurchmesser direkt auf das Wellrohr aufgepresst. Insbesondere bei hohen Drücken erhöht dies die Diffusionsdichtigkeit noch. Die Dichtigkeit kann überdies durch eine Schweißverbindung unterstützt und noch weiter verbessert werden. Dazu wird beispielsweise zunächst der Fassungsteil mit dem Wellrohr verpresst und nachfolgend eine Erwärmung des Pressverbindung vorgenommen. Die Erwärmung kann beispielsweise mit einem Induktionserwärmungsvorgang erreicht werden. Durch das Zusammenwirken der Presskraft an der Berührungsfläche zwischen der Rippe des Wellrohrs und der Innenwandung und der kurzzeitig einwirkenden hohen Temperatur (unterhalb der Schmelztemperatur der beteiligten Metalle) kann eine Schweißverbindung entstehen.

Der Anschluss des ersten Teils der Fassung an einen weiteren Fluidkanal kann beispielsweise im Wege einer Löt- oder Schweißverbindung erfolgen, indem ein entsprechendes Leitungsstück in das Teil eingesetzt und mit diesem verlötet wird. Zusätzlich kann dieses Leitungsmittel mit dem Wellrohr verlötet oder verschweißt sein. Bevorzugt wird eine Lötverbindung mit dem stirnseitigen Ende des Wellrohrs.

Der zweite Teil der Fassung kann mit der Ummantelung des Wellrohrschlauchs in formschlüssigem Eingriff stehen. Dazu kann der zweite Teil radial nach innen komprimiert sein, beispielsweise durch Verpressen in einem schmalen oder breiteren ringförmigen Bereich. Wird die Verpressung in einem schmalen ringförmigen Bereich vorgenommen, ist dieser vorzugsweise zwischen zwei Rippen des Wellrohrs angeordnet, um eine Wellrohrdeformation zu mindern oder auszuschließen.

Der zweite Teil der Fassung kann bedarfsweise innen profiliert sein. Dazu können an seiner Wandung Rippen oder auch ein Gewinde vorgesehen sein. Dadurch wird bei der Verpressung eine besonders feste Verbindung zwischen der Fassung und der Ummantelung erreicht.

Vorteilhafte Einzelheiten von Ausführungsformen der Erfindung ergeben sich aus der nachfolgenden Figurenbeschreibung, der Zeichnungen oder aus Unteransprüchen:

In der Zeichnung sind Ausführungsbeispiele der Erfindung veranschaulicht. Es zeigen:
- Figur 1: Eine Wellrohrschlauchleitung in längs geschnittener ausschnittsweiser Darstellung,
- Figur 2: einen Wellrohrschlauch in ausschnittsweiser längs geschnittener Darstellung,
- Figur 3: den Wellrohrschlauch nach Figur 2 mit einer im Endbereich entfernten Ummantelung in längs geschnittener Darstellung,
- Figur 4: eine Fassung für die Wellrohrschlauchleitung nach Figur 2, angeschlossen an ein weiteres Leitungsmittel in längs geschnittener Darstellung, und
- Fig. 5-7: abgewandelte Ausführungsformen einer Wellrohrschlauchleitung in verpresstem Zustand und in längs geschnittener Darstellung.

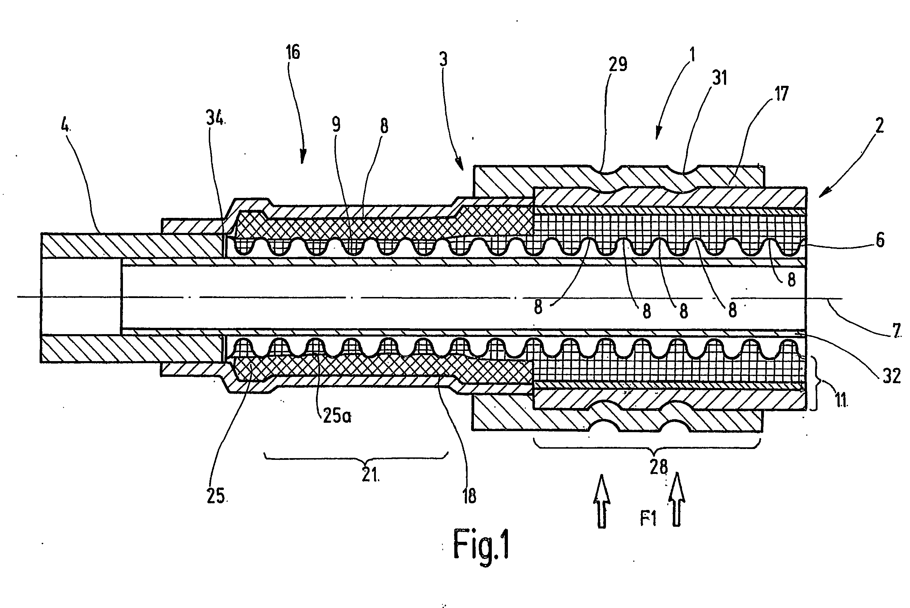

In Figur 1 ist eine Wellrohrschlauchleitung 1 ausschnittsweise veranschaulicht. Die Wellrohrschlauchleitung 1 enthält einen Wellrohrschlauch 2, der eine flexible Fluidleitung bildet. Der Wellrohrschlauch 2 ist über eine Fassung 3 an ein Rohrstück 4 oder ein sonstiges Leitungsmittel angeschlossen. Anstelle des Rohrstücks 4 kann auch ein sonstiges Anschlussstück vorgesehen sein, das eine weiterführende Leitung bildet, oder Bestandteil eines angeschlossenen Aggregats ist. Wellrohrschlauchleitungen der in Figur 1 veranschaulichten Art eignen sich zur beweglichen und vibrationsfesten Fluidverbindung zwischen einzelnen Aggregaten oder Komponenten der Kältemaschine. Insbesondere ist die Wellrohrschlauchleitung 1 zur Verbindung von Fluidräumen geeignet, die unter hohem Innendruck von bis zu mehreren Hundert Bar stehen.

Der Wellrohrschlauch 2 enthält ein Wellrohr 6. Dieses weist einen kreisförmigen Querschnitt auf, wobei der Durchmesser des Wellrohrs entlang seiner Achse 7 wellenförmig zu- und abnimmt. Das Wellrohr 6 ist ein dünnwandiges Metallrohr. Durch die wellenförmige Durchmesservariation weist es ringförmige, von einander beabstandete Rippen 8 auf, zwischen denen jeweils Zwischenräume9 vorhanden sind. Die Rippen 8 bilden einzelne Ringe oder ein Gewinde.

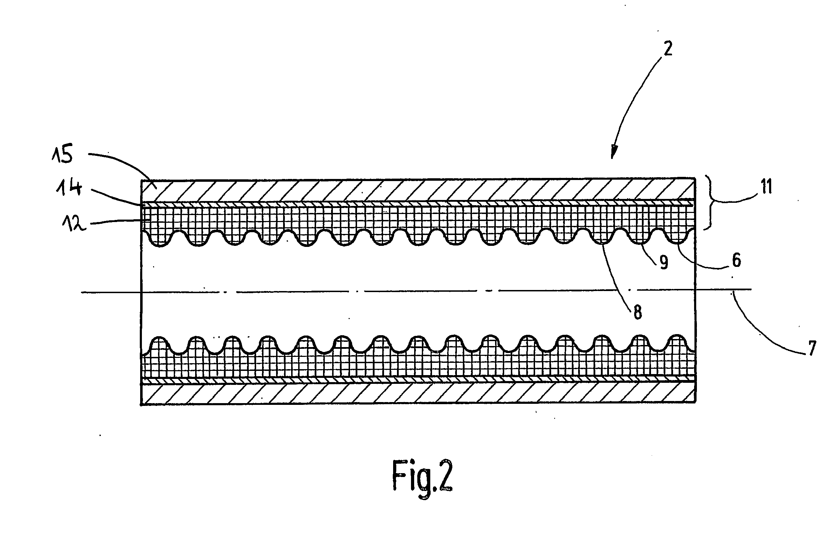

Der Wellrohrschlauch 2 ist gesondert in Figur 2 veranschaulicht. Das Wellrohr 6 trägt eine Ummantelung 11, die aus einer Schlauchseele 12, einem konzentrisch zu dem Wellrohr 6 auf der Schlauchseele 12 angeordneten Druckträger 14 und einer äußeren Abdeckung 15 besteht. Die Schlauchseele 12 ist beispielsweise ein Elastomerkörper, der stoffschlüssig mit dem Wellrohr 6 verbunden ist, und auf den Rippen 8 sitzt und die. Zwischenräume 9 zwischen den Rippen 8 ausfüllt. Sein zylindrischer Außenmantel wird vom dem Druckträger 14 umschlossen, der beispielsweise durch einen Gewebeschlauch, sich überkreuzende textile Fäden oder Drähte oder eine ähnliche zugsteife Struktur gebildet sein kann. Die äußere Abdeckung 15 ist wiederum ein Elastomermaterial oder ein Kunststoff, der zum äußeren Schutz des Wellrohrschlauchs 2 dient.

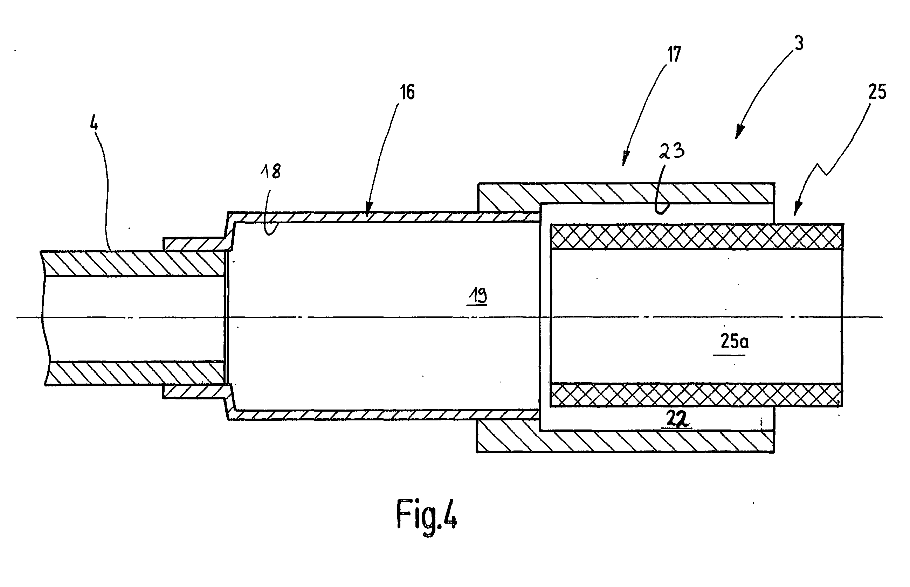

Zum Anschluss des Wellrohrschlauchs 2 dient die in Figur 4 gesondert veranschaulichte Fassung 3. Die Fassung 3 weist einen ersten rohrförmigen Teil 16 und einen zweiten becherförmigen Teil 17 auf. Der erste Teil 16 legt mit seiner Innenwandung 18 eine Durchgangsöffnung 19 fest. Diese ist ungefähr zylindrisch - zumindest weist sie einen zylindrischen Abschnitt 21 auf, dessen Durchmesser geringfügig größer ist als der Außendurchmesser des Wellrohrs 6.

Der erste Teil 16 erstreckt sich in eine bodenseitige Öffnung des zweiten Teils 17 hinein und ist hier mit dem Boden des becherförmig ausgebildeten zweiten Teils 17 verbunden, beispielsweise verschweißt oder verlötet oder einstückig ausgebildet. Ausgehend von der in den Becher mündenden Durchgangsöffnung 19 erstreckt sich eine weiterführende Öffnung 22 durch den Teil 17, so dass die Fassung 3 an beiden Stirnseiten offen ist. Die die Öffnung festlegende Wandung 23 des zweiten Teils ist beispielsweise zylindrisch glatt ausgebildet.

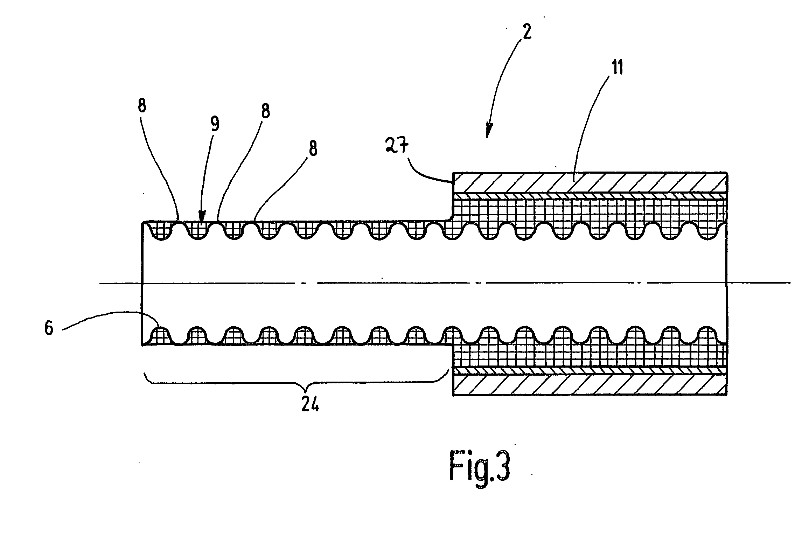

Zu der Fassung 3 gehört eine Dichtungsbuchse 25, die in Figur 4 vor dem Anschluss und dem Verpressen der Fassung 3 mit dem Wellrohrschlauch 2 veranschaulicht ist. Die Dichtungsbuchse 25 ist hohlzylindrisch ausgebildet und weist eine zylindrische Innenwandung 25a auf. An ihrer Außenseite weist sie eine zylindrische Mantelfläche auf. Der Außendurchmesser der Dichtungsbuchse 25 stimmt etwa mit dem Innendurchmesser des Teils 16 überein oder ist etwas geringer. Der Durchmesser der Innenwandung 25a ist hingegen geringfügig größer als der Außendurchmesser der Rippen 8 (Figur 3). Die Dichtungsbuchse 25 besteht aus einem deformierbaren Material, beispielsweise Kunststoff oder einem Elastomer. Das Material ist vorzugsweise elastisch oder plastisch oder plastisch/elastisch deformierbar. Es kann ein Silikongummi, ein anderer Gummi oder ein sonstiger geeigneter Kunststoff sein, der von dem abzudichtenden Fluid nicht angegriffen wird. Die Länge der Dichtungsbuchse 25 stimmt im Wesentlichen mit der Länge des Teils 16 überein. Es lässt sich in dieses Teil einfügen, wobei es mit seiner Stirnfläche an dem Übergang von dem Teil 16 zu dem Rohrstück 4 an einer Ringschulter eine Anlage findet.

Die in Figur 1 veranschaulichte Wellrohrschlauchleitung 1 wird folgendermaßen hergestellt:

Es wird von einem geeigneten Rohmaterial zunächst ein Stück Wellrohrschlauch 2 in der gewünschten Länge abgetrennt. Von dem ausschnittsweise in Figur 3 dargestellten Wellrohrschlauch 2 wird dann die Ummantelung 11 in einem Endbereich 24 von dem Wellrohr 6 entfernt. Dabei wird das Wellrohr 6 in dem Endbereich 24 freigelegt. Wenigstens einige der Rippen 8 des Endbereichs 14 werden dabei beispielsweise mittels umlaufender Drahtbürsten soweit gesäubert, dass sie an dem Außenumfang der Rippen 8 eine metallisch saubere Oberfläche aufweisen. Die Zwischenräume 9 können müssen nicht von vorhandenen Elastomerreste der Schlauchseele 12 befreit werden - sie können in den Zwischenräumen verbleiben. Es kann jedoch vorteilhaft sein, auch die Zwischenräume 9 frei zu machen, um Pufferräume auszubilden. Jedenfalls bleiben die Zwischenräume aber mit Elastomer gefüllt, wenn die Rippen 8 ein Gewinde bilden, um den zwischen den Rippen vorhandenen Gewindegang zu schließen.

Der Übergang zwischen dem freigelegten Endbereich 24 des Wellrohrs und der unverletzten Ummantelung 11 wird durch eine Ringschulter 27 gebildet, deren Form der Form des Bodens des becherförmigen Teils 17 (Figur 1) angepasst ist. Im vorliegenden Ausführungsbeispiel wird die Ringschulter 27 durch eine im wesentlichen plane ringförmige Stirnfläche der Ummantelung 11 gebildet.

Zur weiteren Montage der Fassung 3 wird das vorbereitete Ende des Wellrohrschlauchs 2, wie es aus Figur 3 ersichtlich ist, in die Fassung gemäß Figur 4 eingeschoben, bis das stirnseitige Ende des Wellrohrs 6 an dem Rohrstück 4 und die Ringschulter 27 an dem Boden des Teils 17 Anlage findet. Dieser Zustand ist in Figur 1 veranschaulicht. Dabei findet der Endbereich 24 in die Dichtungsbuchse 25. Der Endbereich 24 sitzt danach mit der Dichtungsbuchse 25 in dem Teil 16.

Bedarfsweise kann zwischen das Wellrohr 6 und das stirnseitige Ende des Rohrstücks 4 ein aus Lot bestehender Ring eingelegt sein. Die Rippen 8 des Wellrohrs 6 sitzen mit geringfügigem Spiel in der Dichtungsbuchse 25. Die Dichtungsbuchse 25 und die Ummantelung 11 des Wellrohrschlauchs 2 sitzt ebenfalls mit geringfügigem Spiel in dem Teil 17 der Fassung 3.

Falls Lot vorhanden ist, wird nun zunächst ein Lötvorgang durchgeführt, in dem das Wellrohr 6 mit seinem Ende an das Rohrstück 4 bzw. das Teil 16 bei einer Lötstelle 34 angelötet wird. Dies erfolgt, wenn zuvor ein Lotring eingelegt worden ist, lediglich durch Erwärmung des betreffenden Bereichs der Fassung 3. Die Zwischenräume 9 werden dabei nicht mit Lot gefüllt - sie bleiben frei. In diesem Verfahrensschritt kann bedarfsweise auch die Lötverbindung zwischen den Teilen 16 und 17 hergestellt werden, wenn diese nicht bereits im vorhinein hergestellt worden ist. Ist hingegen keine Lötverbindung zwischen dem Ende des Wellrohrs 6 und der Fassung 3 bzw. dem Rohrstück 4 gewünscht, kann der Lötschritt entfallen.

Zur Herstellung der Abdichtung des Fluidkanals, d.h. letztendlich des Wellrohrs 6, gegen das Rohrstück 4 wird die Fassung 3 nun in die in Figur 1 veranschaulichte Form überführt. Dazu werden beide Fassungsteile (Teil 16, Teil 17) jeweils in einem ringförmigen Bereich radial nach innen gequetscht (beispielsweise durch mehrere radial nach innen bewegte Pressbacken, die auf den Außenumfang des Teils 16 wirken). Die Teile 16, 17 werden plastisch deformiert. Dadurch nimmt der freie Innendurchmesser der Durchgangsöffnung 19 in dem Abschnitt 21 ab. Die Dichtungsbuchse 25 wird somit auf den Endbereich 24 gequetscht und liegt mit ihrer Innanwandung 25a radial nach innen gerichteter Vorspannung an den Rippen und den in den Zwischenräumen verbliebenen Elastomerresten an. Dies sowie der Presssitz der Dichtungsbuchse 25 an der Innenwandung 18 in dem Teil 16 bewirkt eine sichere Abdichtung.

In dem Abschnitt 28 entstehen ringförmige radial nach innen deformierte Pressbereiche 29, 31, die axial mit den Zwischenräumen 9 zwischen den Rippen 8 übereinstimmen, und die Ummantelung 11 form- und kraftschlüssig festklemmen. Dadurch ist die Ummantelung 11 des Wellrohrschlauchs 2 axial fest in der Fassung 3 gehalten. Die Abdichtung wird hingegen durch den metallischen Presssitz zwischen der Innenwandung 18 und den Außenumfangsflächen der Rippen 8 in dem Abschnitt 21 erreicht.

Wie Figur 1 veranschaulicht, kann in das Wellrohr 6 ein Schlauch oder flexibles Rohr 32 eingebracht sein, das spielfrei in das Rohrstück 4 ragt, und die Rippen 8 zu dem Fluidkanal hin abdeckt. Dies ist insbesondere deshalb möglich, weil die Fassung 3 den Wellrohrschlauch anschließt, ohne an irgendeiner Stelle dessen Innendurchmesser zu verengen. Das Rohr 32 kann zur Minderung der Geräuschbildung einer Fluidströmung sowie zur Reduzierung des Durchflusswiderstands dienen. Es kann jedoch bedarfsweise auch weggelassen sein.

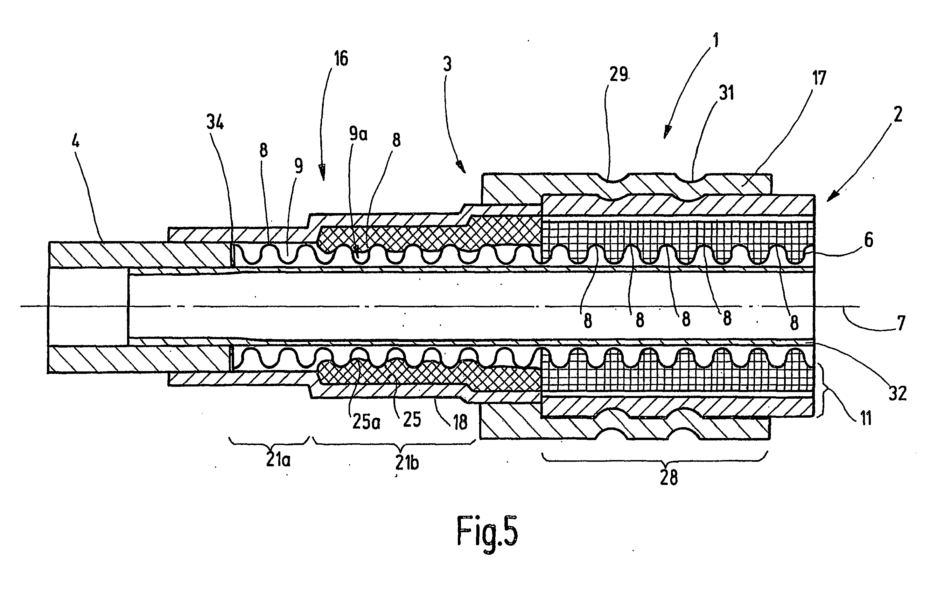

Eine abgewandelte Ausführungsform der Fassung 3 ist aus Figur 5 ersichtlich. Diese stimmt im wesentlichen mit der vorbeschriebenen Fassung 3 überein. Die Unterschiede bestehen in folgendem:

Die Fassung nach Figur 5 weist als Dichtungsmittel nicht nur die Dichtungsbuchse 25 sondern zusätzlich eine metallische Abdichtung auf. Dazu ist der erste Teil 16 in einen Abschnitt 21a unterteilt, dessen Innendurchmesser etwa mit dem Außendurchmesser der Rippen 8 übereinstimmt oder diesen geringfügig überschreitet. Außerdem weist der Teil 16 einen zweiten Abschnitt 21b auf, dessen Innendurchmesser mit dem Außendurchmesser der Dichtungsbuchse 25 übereinstimmt. Beim Verpressen werden beide Abschnitte 21a, 21b radial nach innen verpresst, wodurch in dem Abschnitt 21a eine metallische Dichtung jeweils mit dem äußeren Scheitel jeder Rippe 8 erreicht wird. Die Kompression des Abschnitts 21b bewirkt das Einquetschen der Buchse 25 und somit eine elastomere Abdichtung. Die Zwischenräume 9 sind bei dieser Ausführungsform vorzugsweise geräumt, um Pufferräume 9a auszubilden. Auf die Räumung der Zwischenräume 9 kann jedoch auch verzichtet werden.

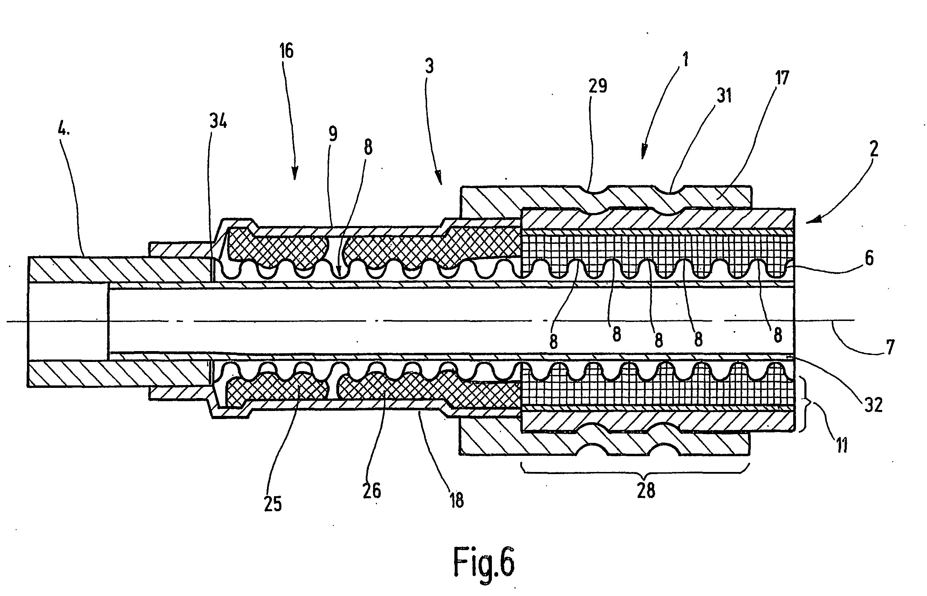

Figur 6 veranschaulicht eine weitere abgewandelte Ausführungsform, die weitgehend mit der Ausführungsform nach Figur 1 übereinstimmt. Jedoch ist zusätzlich zu der Dichtungsbuchse 25 eine weitere Dichtungsbuchse 26 angeordnet, die in geringem axialen Abstand zu der Dichtungsbuchse 25 angeordnet ist. Die Dichtungsbuchsen 25, 26 können stirnseitig auch aneinander anliegen. Diese Ausführungsform bietet die Möglichkeit, die Dichtungsbuchsen 25, 26 aus unterschiedlichen Materialien auszubilden. Beispielsweise können unterschiedliche Festigkeiten, Elastizitäten oder chemische Beständigkeiten vorhanden sein. Diese Ausführungsform bietet die Möglichkeit, die Dichtungsanordnung optimal auch an schwierige Verhältnisse anzupassen.

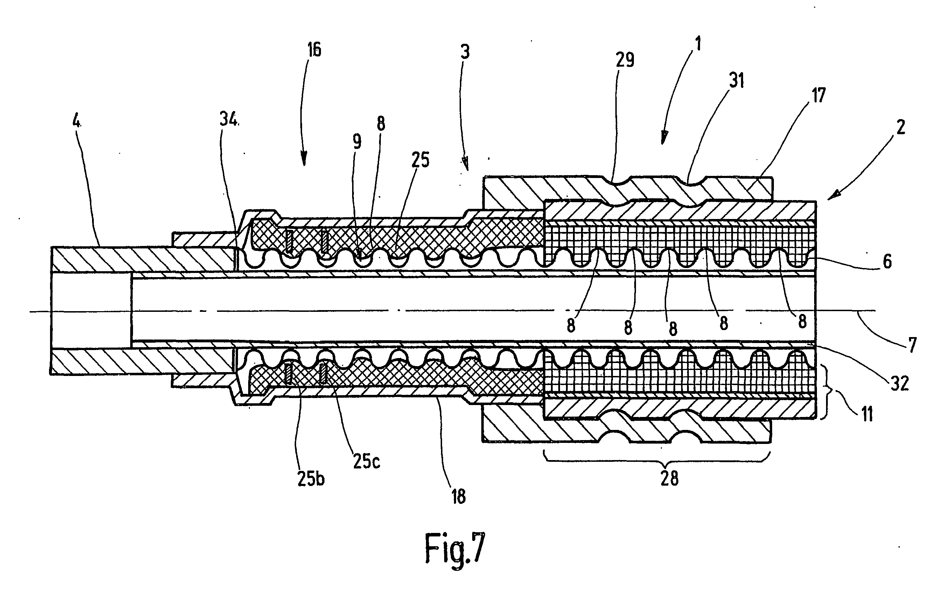

Schließlich ist in Figur 7 eine weiter abgewandelte Ausführungsform der Fassung 3 und der mit dieser zu erzielenden Abdichtung veranschaulicht. Im Unterschied zu der Ausführungsform nach Figur 1 ist die Dichtungsbuchse 25 hier nicht homogen ausgebildet sondern sie enthält Einlagen 25b, 25c. Diese können beispielsweise in Form von, wie dargestellt, flachen Metallringen koaxial in die Buchse eingebracht sein, um Diffusionssperren zu bilden und um die radiale Kompressibilität der Dichtungsbuchse 25 zu begrenzen. Die ringförmigen Einlagen 25b, 25c sind vorzugsweise im Bereich von Zwischenräumen 9 angeordnet. Sie können, wie dargestellt, rechteckigen, quadratischen oder auch runden Querschnitt aufweisen. Bei dieser Ausführungsform werden die Zwischenräume vorzugsweise geräumt. Es ist jedoch auch möglich, gerade im Bereich der Einlagen auf die Räumung zu verzichten, um hier eine besonders hohe Pressung zwischen verbleibenden Elastomerresten und der Dichtungsbuchse 25 zu erzielen.

Im Übrigen gilt für die Ausführungsformen nach Figur 6 und Figur 7 die Beschreibung zu der Ausführungsform nach Figur 1 entsprechend.

In Abwandlung der vorbeschriebenen Ausführungsformen kann die Dichtungsbuchse 25 auch von Anbeginn an ein Übermaß zu dem Teil 16 aufweisen und in dieses eingepresst sein. Sie kann auch aus einer klebenden, durch Verformung aktiverbaren Masse, einer thermisch aufschmelzbaren Masse oder ähnlichem sein.

Bei der Fassung nach den vorstehend beschriebenen Ausführungsformen kann das Teil 17 an seiner Wandung 23 mit einer Profilierung versehen sein. Die Profilierung kann durch einzelne ringförmige Rippen gebildet sein, die konzentrisch zu der Achse 7 angeordnet sind. Im Urzustand, d.h. wenn der Teil 17 noch nicht deformiert ist, ist der Innendurchmesser der Rippen 33 so groß, dass er den Außendurchmesser der Abdeckung 15 übersteigt. Somit lässt sich der Abschnitt 28 der Ummantelung leicht in die Fassung 3 einschieben. Bei Verpressen (radiales Komprimieren des Teils 17) dringen die Rippen 33 dann in die Abdeckung 15 des Wellrohrschlauchs 2 ein und sichern diesen formschlüssig. Diese Ausführungsform hat insbesondere dann Bedeutung, wenn die radial nach innen gerichtete Umfangskraft zur Deformierung des Teils 17 als Kraftbelag in einem relativ breiten Ringbereich des Teils 17 aufgebracht werden soll, so dass nahezu die gesamte Wandung 23 radial nach innen deformiert wird. Anstelle der Rippen 33 kann auch ein Schneidgewinde vorgesehen sein, das sich in die Abdeckung 15 schneidet, wenn die Fassung 3 mit dem Wellrohrschlauch 2 verschraubt wird.

Zum Anschluss von nicht mit Armaturen versehenen Wellrohrschläuchen zum Transport vorzugsweise gasförmiger Medien bei Hochdruckanwendungen, ist eine Fassung 3 vorgesehen, die ein freigelegtes Ende des Wellrohrs 6 des Wellrohrschlauchs 2 aufnimmt, und mit diesem unter Ausbildung einer metallischen Abdichtung verpresst wird. Die Abdichtung wird durch eine Dichtungsbuchse (25) zwischen der Innenwandung 18 eines Teils 16 der Fassung und den Rippen 8 des Wellrohrs 6 erreicht. Ein weiterer Teil 17 der Fassung 3 fasst einen Abschnitt 28 der Ummantelung 11 des Wellrohrschlauchs 2 sowohl in Axialrichtung als auch im Hinblick auf Kippbewegungen fest, so dass Schwenkbewegungen des Wellrohrschlauchs 2 nicht zu einer Relativbewegung zwischen dem Wellrohr 6 und der Fassung 3, insbesondere des Teils 16 führen. Der Dichtungsbereich bleibt somit auch bei mechanischer Belastung der Wellrohrschlauchleitung 1 auf Zug oder Biegung unbeeinflusst.

## Patentansprüche

1. Wellrohrschlauchleitung (1), insbesondere für Druck führende Einrichtungen, insbesondere Kältemaschinen für Kraftfahrzeuge,
mit einem Wellrohrschlauch (2), der ein Wellrohr (6) aufweist, das axial voneinander beabstandete schrauben- oder ringförmige Rippen (8) aufweist und das von einer Ummantelung (11) umgeben ist, die das Wellrohr (6) mit Ausnahme wenigstens eines Endbereichs (24) umgibt,
mit einer Fassung (3), die einen ersten rohrförmigen Teil (16) mit einer Durchgangsöffnung (19) zur Aufnahme des Endbereichs (24) und einen zweiten rohrförmigen Teil (17) mit einer Öffnung (22) zur Aufnahme eines Abschnitts (28) der Ummantelung (11) aufweist, wobei die Durchgangsöffnung (19) von einer Innenwandung (18) des ersten Teils (16) und die Öffnung (22) von einer Wandung (23) des zweiten Teils (17) festgelegt ist,
mit einem Leitungsmittel (4), das mit der Fassung (3) fluiddicht verbunden ist,
**dadurch gekennzeichnet, dass** in dem ersten rohrförmigen Teil (16) wenigstens eine Dichtungsbuchse (25) angeordnet ist.

2. Wellrohrschlauchleitung nach Anspruch 1, **dadurch gekennzeichnet, dass** der rohrförmige Teil (16) ein Metallrohr ist, das in seiner Radialrichtung derart deformiert ist, dass die Dichtungsbuchse (25) zwischen seiner Innenwandung (18) und wenigstens einer Rippe (8) des Wellrohrs (6) abdichtend anliegt, wobei zwischen dem ersten Teil (16) und dem Wellrohr (6) ein fluiddichter Presssitz ausgebildet ist.

3. Wellrohrschlauchleitung nach Anspruch 1, **dadurch gekennzeichnet, dass** der erste rohrförmige Teil (16) in seiner Radialrichtung derart deformiert ist, dass er die Dichtungsbuchse (25) mit ihrer Innenwandung (25a) an mehrere Rippen (8) des Wellrohrs (6) abdichtend anpresst und dass zwischen dem ersten Teil (16) und dem Wellrohr (6) unter Vermittlung der Dichtungsbuchse (25) ein fluiddichter Presssitz ausgebildet ist.

4. Wellrohrschlauchleitung nach Anspruch 1, **dadurch gekennzeichnet, dass** der erste Teil (16) plastisch deformiert ist.

5. Wellrohrschlauchleitung nach Anspruch 4, **dadurch gekennzeichnet, dass** die plastische Deformation in einem ringförmigen Bereich (21) des ersten Teils (16) radial nach innen gerichtet ist.

6. Wellrohrschlauchleitung nach Anspruch 1, **dadurch gekennzeichnet, dass** die Dichtungsbuchse (25) in montiertem Zustand plastisch deformiert ist.

7. Wellrohrschlauchleitung nach Anspruch 1, **dadurch gekennzeichnet, dass** die Dichtungsbuchse in montiertem Zustand elastisch deformiert ist.

8. Wellrohrschlauchleitung nach Anspruch 1, **dadurch gekennzeichnet, dass** die deformierte Dichtungsbuchse (25) eine Formschlussverbindung zwischen dem Wellrohr (6) und dem deformierten ersten Teil (16) bildet.

9. Wellrohrschlauchleitung nach Anspruch 1, **dadurch gekennzeichnet, dass** die Dichtungsbuchse (25) aus einem einzigen Material ausgebildet ist.

10. Wellrohrschlauchleitung nach Anspruch 1, **dadurch gekennzeichnet, dass** die Dichtungsbuchse (25) wenigstens eine Einlage (25b) aus einem anderen Material aufweist.

11. Wellrohrschlauchleitung nach Anspruch 1, **dadurch gekennzeichnet, dass** der Dichtungsbuchse (25) eine weitere Dichtungsbuchse (26) zugeordnet ist, die axial an die Dichtungsbuchse (25) anschließend oder in einem Abstand zu dieser angeordnet ist.

12. Wellrohrschlauchleitung nach Anspruch 1, **dadurch gekennzeichnet, dass** Wellrohr (6) mit dem Leitungsmittel (4) verbunden ist.

13. Wellrohrschlauchleitung nach Anspruch 10 und 11, **dadurch gekennzeichnet, dass** das Leitungsmittel (4) mit dem ersten Teil (16) und mit dem Wellrohr (6) verlötet ist.

14. Wellrohrschlauchleitung nach Anspruch 1, **dadurch gekennzeichnet, dass** der erste Teil (16) und der zweite Teil (17) miteinander verschweißt oder verlötet sind oder einstückig verbunden ist.

15. Wellrohrschlauchleitung nach Anspruch 1, **dadurch gekennzeichnet, dass** der zweite Teil (17) mit der Ummantelung (11) in formschlüssigem Eingriff steht.

16. Wellrohrschlauchleitung nach Anspruch 1, **dadurch gekennzeichnet, dass** der zweite Teil (17) mit der Ummantelung (11) verpresst ist.

17. Wellrohrschlauchleitung nach Anspruch 1, **dadurch gekennzeichnet, dass** der zweite Teil (17) eine Innenprofilierung (33) aufweist.

18. Wellrohrschlauchleitung nach Anspruch 1, **dadurch gekennzeichnet, dass** in dem Wellrohr (6) ein Schlauch (32) angeordnet ist.

19. Verfahren zum Anschließen eines Wellrohrschlauchs (2) an andere Leitungsmittel (4), mit folgenden Schritten:
a. Entfernen der Ummantelung (11) des Wellrohrschlauchs (2) in einem Endbereich (24), dessen Länge geringer ist als die Länge eines ersten Teils (16) einer Fassung (3),
b. Säubern des freigelegten Endbereichs (24) Wellrohrs (6),
c. Aufbringen einer Dichtungsbuchse (25) auf den Endbereich (24, 28) des Wellrohrschlauchs oder einbringen der Dichtungsbuchse (25) in die Fassung (3),
d. Aufbringen der Fassung (3) auf den Endbereich (24, 28) des Wellrohrschlauchs (2),
e. Einsetzen des Leitungsmittels (4) in den ersten Teil (16) der Fassung (3),
f. Verbinden des Leitungsmittels (4) mit dem ersten Teil (16),
g. Verformen der Fassung (3) zur Sicherung und Abdichtung derselben gegen das Wellrohr (6) und die Ummantelung.

## Claims

1. Corrugated hose assembly (1), in particular for pressure-bearing systems, in particular refrigerating machines for motor vehicles,
with a corrugated hose (2), which has a corrugated pipe (6), which has axially spaced helical or annular ribs (8) and is surrounded by a casing (11), which surrounds the corrugated pipe (6) except for at least one end region (24),
with a socket (3), which has a first tubular part (16) with a passage (19) to receive the end region (24) and a second tubular part (17) with an opening (22) to receive a section (28) of the casing (11), wherein the passage (19) is defined by an inside wall (18) of the first part (16) and the opening (22) is defined by a wall (23) of the second part (17),
with a pipe element (4), which is connected to the socket (3) to be fluid-tight,
**characterised in that** at least one sealing bush (25) is arranged in the first tubular part (16).

2. Corrugated hose assembly according to Claim 1, **characterised in that** the tubular part (16) is a metal pipe, which is deformed in its radial direction in such a way that the sealing bush (25) abuts between its inside wall (18) and at least one rib (8) of the corrugated pipe (6) to form a seal, wherein a fluid-tight press fit is formed between the first part (16) and the corrugated pipe (6).

3. Corrugated hose assembly according to Claim 1, **characterised in that** the first tubular part (16) is deformed in its radial direction in such a way that it presses the sealing bush (25) with its inside wall (25a) against several ribs (8) of the corrugated pipe (6) to form a seal, and that a fluid-tight press fit is formed between the first part (16) and the corrugated pipe (6) by way of the sealing bush (25).

4. Corrugated hose assembly according to Claim 1, **characterised in that** the first part (16) is plastically deformed.

5. Corrugated hose assembly according to Claim 4, **characterised in that** the plastic deformation in an annular region (12) of the first part (16) is directed radially inwards.

6. Corrugated hose assembly according to Claim 1, **characterised in that** the sealing bush (25) is plastically deformed in assembled state.

7. Corrugated hose assembly according to Claim 1, **characterised in that** the sealing bush is elastically deformed in assembled state.

8. Corrugated hose assembly according to Claim 1, **characterised in that** the deformed sealing bush (25) forms a positive connection between the corrugated pipe (6) and the deformed first part (16).

9. Corrugated hose assembly according to Claim 1, **characterised in that** the sealing bush (25) is made from a single material.

10. Corrugated hose assembly according to Claim 1, **characterised in that** the sealing bush (25) has at least one insert (25b) made of a different material.

11. Corrugated hose assembly according to Claim 1, **characterised in that** the sealing bush (25) has a further sealing bush (26) associated with it, which is arranged to axially adjoin the sealing bush (25) or is arranged at a distance from this.

12. Corrugated hose assembly according to Claim 1, **characterised in that** the corrugated pipe (6) is connected to the pipe element (4).

13. Corrugated hose assembly according to Claim 10 and 11, **characterised in that** the pipe element (4) is soldered to the first part (16) and to the corrugated pipe (6).

14. Corrugated hose assembly according to Claim 1, **characterised in that** the first part (16) and the second part (17) are welded or soldered together or are connected in one piece.

15. Corrugated hose assembly according to Claim 1, **characterised in that** the second part (17) stands in positive engagement with the casing (11).

16. Corrugated hose assembly according to Claim 1, **characterised in that** the second part (17) is pressed with the casing (11).

17. Corrugated hose assembly according to Claim 1, **characterised in that** the second part (17) has an inner profiling (33).

18. Corrugated hose assembly according to Claim 1, **characterised in that** a hose (32) is arranged in the corrugated pipe (6).

19. Method for connecting a corrugated hose (2) to other pipe elements (4), with the following steps:
a. removing the casing (11) of the corrugated hose (2) in an end region (24), the length of which is shorter than the length of a first part (16) of a socket (3),
b. cleaning the exposed end region (24) of the corrugated pipe (6),
c. attaching the sealing bush (25) onto the end region (24, 28) of the corrugated hose or inserting the sealing bush (25) into the socket (3),
d. attaching the socket (3) onto the end region (24, 28) of the corrugated hose (2),
e. inserting the pipe element (4) into the first part (16) of the socket (3),
f. connecting the pipe element (4) to the first part (16),
g. deforming the socket (3) to secure and seal it against the corrugated pipe (6) and the casing.

## Revendications

1. Conduite comprenant un ensemble tuyau flexible-tube ondulé (1), en particulier pour des dispositifs conduisant la pression, en particulier des machines frigorifiques pour des véhicules automobiles, comprenant :
un ensemble tuyau flexible-tube ondulé (2) présentant un tube ondulé (6) qui présente des nervures (8) en forme de vis ou d'anneau et agencées à distance axiale l'une de l'autre et qui est entouré d'une gaine (11) entourant le tube ondulé (6), à l'exception d'au moins une zone terminale (24) ;
une monture (3) qui présente une première partie tubulaire (16) comportant une ouverture de passage (19) pour réceptionner la zone terminale (24) et une seconde partie tubulaire (17) comportant une ouverture (22) pour réceptionner un tronçon (28) de la gaine (11), l'ouverture de passage (19) étant définie par une paroi intérieure (18) de la première partie (16) et l'ouverture (22) étant définie par une paroi (23) de la seconde partie (17) ;
une partie centrale de conduite (4) qui est reliée à la monture (3) avec étanchéité aux liquides,
**caractérisée en ce qu'**au moins une douille d'étanchéité (25) est agencée dans la première partie tubulaire (16).

2. Conduite comprenant un ensemble tuyau flexible-tube ondulé selon la revendication 1, **caractérisée en ce que** la partie tubulaire (16) est un tube en métal qui est déformé dans sa direction radiale de telle sorte que la douille d'étanchéité (25) vient s'appliquer de manière étanche entre sa paroi intérieure (18) et au moins une nervure (8) du tube ondulé (6), une mise en place sans jeu et étanche aux liquides étant réalisée entre la première partie (16) et le tube ondulé (6).

3. Conduite comprenant un ensemble tuyau flexible-tube ondulé selon la revendication 1, **caractérisée en ce que** la première partie tubulaire (16) est déformée dans sa direction radiale de manière à presser la douille d'étanchéité (25) avec sa paroi intérieure (25a) sur plusieurs nervures (8) du tube ondulé (6) et **en ce qu'**une mise en place sans jeu et étanche aux liquides est réalisée entre la première partie (16) et le tube ondulé (6) sous l'intervention de la douille d'étanchéité (25).

4. Conduite comprenant un ensemble tuyau flexible-tube ondulé selon la revendication 1, **caractérisée en ce que** la première partie (16) est déformée plastiquement.

5. Conduite comprenant un ensemble tuyau flexible-tube ondulé selon la revendication 4, **caractérisée en ce que** la déformation plastique est orientée radialement vers l'intérieur dans une zone annulaire (21) de la première partie (16).

6. Conduite comprenant un ensemble tuyau flexible-tube ondulé selon la revendication 1, **caractérisée en ce que** la douille d'étanchéité (25) est déformée plastiquement dans l'état monté.

7. Conduite comprenant un ensemble tuyau flexible-tube ondulé selon la revendication 1, **caractérisée en ce que** la douille d'étanchéité est déformée élastiquement dans l'état monté.

8. Conduite comprenant un ensemble tuyau flexible-tube ondulé selon la revendication 1, **caractérisée en ce que** la douille d'étanchéité déformée (25) forme une liaison par coopération de formes entre le tube ondulé (6) et la première partie déformée (16).

9. Conduite comprenant un ensemble tuyau flexible-tube ondulé selon la revendication 1, **caractérisée en ce que** la douille d'étanchéité (25) est réalisée à partir d'un unique matériau.

10. Conduite comprenant un ensemble tuyau flexible-tube ondulé selon la revendication 1, **caractérisée en ce que** la douille d'étanchéité (25) présente au moins un insert (25b) fabriqué à partir d'un autre matériau.

11. Conduite comprenant un ensemble tuyau flexible-tube ondulé selon la revendication 1, **caractérisée en ce qu'**une autre douille d'étanchéité (26) est attribuée à la douille d'étanchéité (25), laquelle est agencée en venant se raccorder axialement à la douille d'étanchéité (25) ou à une certaine distance de celle-ci.

12. Conduite comprenant un ensemble tuyau flexible-tube ondulé selon la revendication 1, **caractérisée en ce que** le tube ondulé (6) est relié avec la partie centrale de conduite (4).

13. Conduite comprenant un ensemble tuyau flexible-tube ondulé selon l'une ou l'autre des revendications 10 et 11, **caractérisée en ce que** la partie centrale de conduite (4) est brasée avec la première partie (16) et avec le tube ondulé (6).

14. Conduite comprenant un ensemble tuyau flexible-tube ondulé selon la revendication 1, **caractérisée en ce que** la première partie (16) et la seconde partie (17) sont soudées ou brasées l'une à l'autre ou reliées en un seul tenant.

15. Conduite comprenant un ensemble tuyau flexible-tube ondulé selon la revendication 1, **caractérisée en ce que** la seconde partie (17) se trouve en engagement par coopération de formes avec la gaine (11).

16. Conduite comprenant un ensemble tuyau flexible-tube ondulé selon la revendication 1, **caractérisée en ce que** la seconde partie (17) est pressée avec la gaine (11).

17. Conduite comprenant un ensemble tuyau flexible-tube ondulé selon la revendication 1, **caractérisée en ce que** la seconde partie (17) présente un profilage intérieur (33).

18. Conduite comprenant un ensemble tuyau flexible-tube ondulé selon la revendication 1, **caractérisée en ce qu'**un tuyau flexible (32) est agencé dans le tube ondulé (6).

19. Procédé pour raccorder un ensemble tuyau flexible-tube ondulé (2) à d'autres parties centrales de conduite (4), comprenant les étapes suivantes .
a. enlèvement de la gaine (11) de l'ensemble tuyau flexible-tube ondulé (2) dans une zone terminale (24) dont la longueur est inférieure à la longueur d'une première partie (16) d'une monture (3) ;
b. nettoyage de la zone terminale dégagée (24) du tube ondulé (6) ;
c. montage d'une douille d'étanchéité (25) sur la zone terminale (24, 28) de l'ensemble tuyau flexible-tube ondulé ou introduction de la douille d'étanchéité (25) dans la monture (3) ;
d. montage de la monture (3) sur la zone terminale (24, 28) de l'ensemble tuyau flexible-tube ondulé (2) ;
e. mise en place de la partie centrale de conduite (4) dans la première partie (16) de la monture (3) ;
f. liaison de la partie centrale de conduite (4) avec la première partie (16) ; et
g. déformation de la monture (3) pour assurer et étancher celle-ci contre le tube ondulé (6) et la gaine.
